# EUROPÄISCHE PATENTSCHRIFT

(11) **EP 3 926 122 B1**
(45) Veröffentlichungstag und Bekanntmachung des Hinweises auf die Patenterteilung: **06.09.2023**
(21) Anmeldenummer: 21179624.8
(22) Anmeldetag: 15.06.2021
(51) Int. Cl.: E04F 19/00, E04F 17/02

(54) **WINKELSTÜCK, UND UNTERKONSTRUKTION FÜR EINE SCHORNSTEINBEKLEIDUNG**
ANGLE PIECE AND SUBSTRUCTURE FOR A CHIMNEY CLADDING
PIÈCE D'ANGLE ET SOUS-STRUCTURE POUR UN REVÊTEMENT DE CHEMINÉE D'AÉRATION

(30) Priorität: 18.06.2020 DE 202020103513 U
(43) Veröffentlichungstag der Anmeldung: 22.12.2021
(73) Patentinhaber: Velken, Matthias, 48712 Gescher (DE)
(72) Erfinder: Velken, Matthias, 48712 Gescher (DE)
(74) Vertreter: Habbel, Ludwig

(56) Entgegenhaltungen:
- AT-B- 310 915
- DE-A1- 3 732 152
- DE-U1-202015 102 792

## Beschreibung

Die Erfindung trifft ein Winkelstück nach dem Oberbegriff des Anspruchs 1 sowie eine Unterkonstruktion einer Schornsteinbekleidung. DE 37 32 152 A1 zeigt ein Winkelstück gemäß der Präambel des Anspruchs 1.

Aus der DE 20 2015 102 792 U1 ist ein gattungsgemäßes Winkelstück bekannt. Um einen Schornstein herum werden mehrere derartige Winkelstücke montiert, typischerweise auf gleicher Höhe. Hierzu sind die Winkelstücke durch ein Spannband miteinander verbunden, so dass sie in Art eines Rings den Schornstein umgeben. Anschließend werden weitere derartige Ringe in anderen Höhen an den Schornstein montiert. Dabei sind die Winkelstücke der einzelnen Ringe lotrecht übereinander ausgerichtet, so dass sie zur Halterung von lotrechten Profilen genutzt werden können. An den Profilen, die beispielsweise in Form von hölzernen Dachlatten oder metallischen Profilrohren ausgestaltet sein können, kann dann die Schornsteinbekleidung befestigt werden.

Um einen Ring, bestehend aus Winkelstücken und einem Spannband, am Schornstein festzulegen, wird das Spannband festgezogen - gespannt - und mittels einer Klemmvorrichtung in diesem gespannten Zustand festgelegt, so dass die Winkelstücke dieses Rings nun am Schornstein festgelegt sind, ohne dass es einer Beschädigung des Schornsteins beispielsweise durch Bohrlöcher oder dergleichen bedarf.

Um das Spannband zu spannen, wird dieses so weit wie möglich manuell straff gezogen. Anschließend wird es an der Wickelachse fixiert. Nun kann die Wickelachse mittels eines Werkzeugs gedreht werden, um die Spannung im Spanngurt weiter zu erhöhen. Zur Festlegung der Wickelachse in der gewünschten Spannstellung wird die Wickelachse mittels einer Kontermutter in ihrer gewünschten Drehstellung am Schenkel des Winkelstücks festgesetzt.

Der Erfindung liegt die Aufgabe zugrunde, ein gattungsgemäßes Winkelstück dahingehend zu verbessern, dass dieses preisgünstig herstellbar ist und die Befestigung des Rings an einem Schornstein vereinfacht. Weiterhin liegt der Erfindung die Aufgabe zugrunde, eine Unterkonstruktion für eine Schornsteinbekleidung anzugeben, die einen sicheren Halt am Schornstein sicherstellt und in kurzer Zeit sowie bei einfacher Handhabung montierbar ist.

Diese Aufgabe wird durch ein Winkelstück nach Anspruch 1 und durch eine Unterkonstruktion nach Anspruch 12 gelöst. Vorteilhafte Ausgestaltungen sind in den Unteransprüchen beschrieben.

Die Erfindung schlägt mit anderen Worten vor, die Wickelachse in mehreren Stufen mithilfe eines Zahnrads drehfest zu fixieren. Hierzu greift eine Sperre wahlweise zwischen zwei Zähne des Zahnrads oder gibt das Zahnrad frei, indem die Sperre und das Zahnrad relativ zueinander beweglich sind. Durch diese Handhabung ist es nicht erforderlich, einerseits die Wickelachse in ihrer das Spannband maximal spannenden Drehstellung zu halten und gleichzeitig die Kontermutter zu betätigen, um die Wickelachse in dieser Drehstellung am Schenkel des Winkelstücks zu fixieren, wobei die Kontermutter so fest angezogen werden muss, dass sich die Wickelachse unter dem Einfluss des Spannbandes nicht unerwünscht zurückstellt. Vielmehr wird vorschlagsgemäß eine einfachere Handhabung dadurch ermöglicht, dass lediglich die Sperre in Eingriff gebracht werden muss, um eine Drehbewegung des Zahnrads und damit die Rückstellung der Wickelachse und eine Lockerung des Spannbandes zu verhindern. Diese erleichterte Handhabung und der damit erzielbare Komfort- und auch Sicherheitsgewinn können mit nur einer geringfügig aufwendigeren Konstruktion des Winkelstücks erreicht werden, so dass das Winkelstück preisgünstig herstellbar ist.

Die Sperre kann beispielsweise als Klappriegel ausgestaltet sein, der zwischen einer Sperrstellung und einer Freigabestellung hin und her geschwenkt oder verschoben werden kann. Eine besonders einfache und preisgünstige, sowie einfach zu handhabende Ausgestaltung des Winkelstücks kann jedoch darin bestehen, dass die Sperre am Schenkel ortsfest ausgestaltet ist und nicht als bewegliches Element. Denn die Wickelachse stellt ohnehin ein bewegliches Element dar, so dass deren Beweglichkeit vorteilhaft genutzt werden kann, um das Zahnrad in Eingriff oder außer Eingriff mit der fest stehenden Sperre zu bringen.

Vorteilhaft können die Zähne asymmetrisch schräg oder gebogen verlaufen, so dass das Zahnrad als Ratsche ausgestaltet ist und in einer ersten Drehrichtung auch dann bewegt werden kann, wenn sich die Klemmvorrichtung in ihrer Sperrstellung befindet. Eine Bewegung des Zahnrads in der entgegengesetzten Drehrichtung wird jedoch durch die Sperre zuverlässig verhindert. Auf diese Weise ist sichergestellt, dass sich das Spannband nicht versehentlich lockert, wenn es gespannt wird. Vielmehr wird "Zahn für Zahn" die Spannung des Spannbandes durch eine entsprechende Drehung der Wickelachse vergrößert und zuverlässig beibehalten, auch wenn der Benutzer keine Kraft auf die Wickelachse ausüben sollte.

Die Ausgestaltung der Klemmvorrichtung mit einem Zahnrad bewirkt zugunsten einer möglichst einfachen und schnellen Handhabung, dass die Spannung im Spannband lediglich stufenweise erzeugt und gehalten werden kann. Am Ende des Spannvorgangs kann möglicherweise die Wickelachse noch um ein gewisses Winkelmaß weiter gedreht werden, ohne dass jedoch die Sperre hinter dem nächst folgenden Zahn des Zahnrads einrasten kann. Wenn nun keine weitere Drehkraft auf die Wickelachse ausgeübt wird, stellt sich die Wickelachse zurück, bis die Sperre dem zuletzt erreichten Zahn des Zahnrads anliegt und eine weitere Rückdrehung des Zahnrads verhindert. Um diese beschriebene Rückstellung des Zahnrads und die damit einhergehende Lockerung des Spannbandes möglichst gering zu halten, kann das Zahnrad vorteilhaft eine Feinverzahnung aufweisen, nämlich wenigstens 25 Zähne, vorteilhaft zwischen 30 und 40 Zähne, so dass das Zahnrad in kleinen Drehwinkelschritten einrastet. Angesichts des Durchmessers der Wickelachse, der dort, wo das Spannband aufgewickelt wird, beispielsweise im Bereich von 10 bis 15 mm liegen kann, wird eine sehr kleinteilige Spannung des Spanngurts am Ende des gesamten Spannweges ermöglicht, so dass die dementsprechend kleine Rückstellung der Wickelachse den sicheren Halt des Rings am Schornstein nicht gefährdet.

Eine konstruktiv einfache und dem entsprechend preisgünstige Möglichkeit, die Klemmvorrichtung zwischen der Freigabestellung und der Sperrstellung zu bewegen, besteht darin, das Zahnrad in axialer Richtung der Wickelachse zu bewegen, so dass es wahlweise in oder außer Eingriff mit der feststehenden Sperre gerät.

Vorteilhaft kann das Winkelstück in an sich bekannter Weise aus Blech bestehen. Im Vergleich zu hölzernen oder aus Kunststoff bestehenden Bauteilen ist so ein optimaler Brandschutz gewährleistet. Außerdem wird so eine Konstruktion des Winkelstücks geschaffen, bei welcher die beiden Schenkel beispielsweise einen im wesentlichen U-förmigen Querschnitt aufweisen, so dass im Inneren eines Schenkels ein ausreichender Einbauraum zur Verfügung steht, um darin das Zahnrad und die Sperre der Klemmvorrichtung unterzubringen. Insbesondere wenn die Sperre als unbewegliches Bauteil ausgestaltet sein soll, kann diese auf einfache Weise durch einen entsprechenden Blech-Abschnitt des Schenkels geschaffen werden, beispielsweise durch eine geeignet ausgerichtete Lasche.

Dabei kann insbesondere vorteilhaft vorgesehen sein, dass das Winkelstück aus einem einzigen, mehrfach gekanteten Blechzuschnitt besteht. Negative Einflüsse, die beispielsweise durch längere Schweißnähte und die damit in das Blechstück eingebrachte Hitze hervorgerufen werden können, werden auf diese Weise zuverlässig vermieden.

Die Klemmvorrichtung kann vorteilhaft unter Verwendung von etlichen handelsüblichen und dementsprechend preisgünstigen Normteilen geschaffen werden: dabei sind zwei Schrauben vorgesehen, die sich aus unterschiedlichen Richtungen in eine Gewindehülse erstrecken und mit dieser die Wickelachse bilden. Die Wickelachse trägt das Zahnrad, welches drehfest auf der Gewindehülse angeordnet ist und dementsprechend gemeinsam mit dieser drehbar ist. Die beiden Schraubenköpfe an den äußeren Enden dieser Wickelachse liegen außerhalb des Schenkels und im Abstand von der Oberfläche des Schenkels, so dass die gesamte Wickelachse in axialer Richtung der beiden Schrauben beweglich im Schenkel gelagert ist. Auf diese Weise kann mit einfachen Mitteln auch eine Relativbeweglichkeit des Zahnrads gegenüber der Sperre verwirklicht werden. Die Schraubenköpfe dienen gleichzeitig als Verliersicherung, wenn im Schenkel eine Bohrung vorgesehen ist, durch welche sich die Wickelachse erstreckt, und diese Bohrung einen kleineren Durchmesser aufweist als der jeweilige Schraubenkopf.

Bei dieser Ausgestaltung der Wickelachse weist die Gewindehülse eine Querbohrung auf, durch die sich das Spannband erstreckt. Mittels einer der beiden Schrauben, die sich bis zu der Querbohrung erstreckt, kann das Spannband in der Gewindehülse fixiert werden. Das Spannband kann also zunächst manuell gespannt werden, indem es so weit wie möglich, jedoch ohne großen Kraftaufwand, durch die Querbohrung gezogen wird. Dabei dreht sich weder die Wickelachse noch das Zahnrad. Anschließend kann mittels der entsprechenden Schraube das Spannband in der Gewindehülse fixiert werden. Da das Spannband noch nicht stark gespannt ist, sind diese Arbeiten auf einfache Weise durchführbar. Erst anschließend wird das Spannband durch Drehung der Wickelachse stärker gespannt. Dabei dreht sich auch das Zahnrad, und in der gewünschten Drehwinkelstellung der Wickelachse wird das Zahnrad mit der Sperre in Eingriff gebracht.

Vorteilhaft kann die Gewindehülse nicht nur eine, sondern zwei Querbohrungen aufweisen. Auf diese Weise kann einerseits ein erstes Ende des Spannbandes in der Wickelachse festgelegt werden, und ein zweiter Bereich des Spannbandes kann wie oben beschrieben festgelegt werden, wenn das Spannband gespannt wird. Dabei können vorteilhaft die beiden Schrauben unabhängig voneinander bis zu der ihnen jeweils nächsten Querbohrung reichen, so dass sie unabhängig voneinander den jeweiligen Abschnitt des Spannbandes festlegen können. Dementsprechend ist es nicht erforderlich, das erstgenannte, unveränderlich an der Wickelachse festgelegte Ende des Spannbands auf andere Weise zu montieren, beispielsweise durch Löten oder dergleichen.

In an sich bekannter Weise kann auch bei der vorschlagsgemä-ßen Ausgestaltung des Winkelstücks vorgesehen sein, dass eine Schraube außerhalb des Schenkels eine Kontermutter trägt. Die Betätigung dieser Kontermutter ist auf besonders einfache Weise möglich, da die Kontermutter nur geringe Kräfte erfordert, denn sie dient nicht dazu, durch hohe Klemmkräfte die Wickelachse gegen eine Rückdrehung zu sichern. Vielmehr dient die Kontermutter lediglich dazu, eine axiale Verstellung der Wickelachse zu verhindern. Dadurch kann die Klemmvorrichtung der Wickelachse zuverlässig in ihrer Sperrstellung gehalten werden, so dass eine versehentliche Rückstellung der Wickelachse und damit einhergehende Lockerung des Spannbandes ausgeschlossen werden kann. Die eigentlichen Haltekräfte, um die Rückstellung der Wickelachse zu verhindern, werden vielmehr durch die Klemmvorrichtung bereitgestellt und zwischen dem Zahnrad und der Sperre aufgenommen.

Eine vorschlagsgemäße Ausgestaltung einer Unterkonstruktion einer Schornsteinbekleidung wird dadurch ermöglicht, dass diese einen Ring mit einem vorschlagsgemäßen Winkelstück aufweist, also wenigstens zwei Winkelstücke, die gemeinsam an einem Spannband gehalten sind und von denen eines vorschlagsgemäß ausgestaltet ist wie oben beschrieben.

In überraschender Weise hat sich herausgestellt, dass das Winkelstück auch zu einem ganz anderen Zweck wirkungsvoll eingesetzt werden kann. Dadurch wird die Wirtschaftlich verbessert, da das Winkelstück in dementsprechend größeren Stückzahlen hergestellt werden kann. Dieser weitere Verwendungszweck betrifft ebenfalls eine Anwendung auf einem Gebäudedach. Derselbe Personenkreis, der die Unterkonstruktion einer Schornsteinbekleidung an einem Schornstein montiert, kann daher auch die Winkelstücke für diesen anderen Zweck montieren: das Spannband kann nämlich in einem Abstand von mehreren Zentimetern oberhalb einer Dachkante als Vogelsperre gespannt werden, um auf diese Weise zu verhindern, dass sich Vögel auf dieser Dachkante niederlassen. Die Dachkante kann beispielsweise der First eines Sattelachs oder eines Pultdachs sein, oder es kann ein Rand eines Flachdachs sein. Anders als bei der Anwendung am Schornstein beträgt der Abstand der Winkelstücke zueinander mehrere Meter, entsprechend der Länge der jeweiligen Dachkante, so dass ein entweder entsprechend langes Spannband verwendet werden kann oder die Vogelsperre aus mehreren Abschnitten mit jeweils dementsprechend kurzen Spannbändern und unter Verwendung dementsprechend mehrerer Winkelstücke zusammengesetzt werden kann.

In dem Fall, dass ein First die Dachkante bildet, wie z. B. bei einem Satteldach oder Pultdach, können zwei Winkelstücke an den beiden Enden des Firstes montiert werden, so dass das Spannband zwischen den beiden Winkelstücken im Abstand von z. B. 3 bis 10 cm oberhalb des Dachfirstes verläuft. Beispielsweise können die beiden Winkelstücke in der Art ausgerichtet sein, dass sie einander symmetrisch gegenüberliegen, jeweils mit einem ersten, aufrecht verlaufenden Schenkel, der zur Befestigung des Winkelstücks am Dach dient, und mit einem zweiten Schenkel, der zu dem gegenüberliegenden Winkelstück weist.

Wenn die beiden Schenkel des Winkelstücks unterschiedlich lang sind, kann der längere Schenkel dazu dienen, das Winkelstück unmittelbar am Hausdach zu befestigen, indem dieser längere Schenkel am Hausdach befestigt wird, z. B. mittels Schrauben. Für die Verwendung des Winkelstücks am Schornstein ist diese größere Länge nicht hinderlich. Alternativ kann vorgesehen sein, dass die beiden Schenkel gleich lang und vergleichsweise kurz ausgestaltet sind, wie es beispielsweise für die Verwendung des Winkelstücks am Schornstein ausreichend ist. In diesem Fall kann die Befestigung am Dach indirekt erfolgen, nämlich mittels eines entsprechenden Sockels, der seinerseits am Dach befestigt wird und an welchem dann das Winkelstück direkt befestigt werden kann, z. B. mittels Schrauben.

In dem Fall, dass ein Rand der Dachfläche die Dachkante bildet, wie z. B. bei einem Flachdach, können zwei Winkelstücke einander gegenüberliegend montiert werden, wie für die Situation an einem First beschrieben. In diesem Fall verläuft das Spannband entlang nur einer Seite des Dachs. Bei Verwendung von drei Winkelstücken an drei Ecken des Dachs, beispielsweise eines Flachdachs, kann das Spannband entlang zweier Seiten des Dachs verlaufen. Bei Verwendung von vier Winkelstücken an vier Ecken des Dachs, beispielsweise des erwähnten Flachdachs, kann das Spannband entlang dreier oder auch aller vier Seiten des Dachs verlaufen. Die drei oder vier Winkelstücke können so ausgerichtet sein, dass ihre Schenkel liegend verlaufen, wie dies auch bei der Anwendung am Schornstein vorgesehen ist, so dass in diesem Fall die Schenkel beispielsweise parallel zur Dachfläche verlaufen. Der Abstand des Spannbandes zur Dachkante kann mittels eines entsprechend hohen Sockels erreicht werden, an dem Das jeweilige Winkelstück montiert wird.

Das Spannband hängt angesichts der Spannweite von mehreren Metern naturgesetzlich notwendigerweise geringfügig durch. Bei Windeinwirkung kann es daher zu Pendelbewegungen des Spannbandes kommen. Der Abstand zum First ist daher so groß gewählt, dass ein Kontakt des Spannbandes mit dem Dachfirst vermieden wird, um erstens Verschleiß am Spannband und an der Dachbedeckung sowie zweitens eine unerwünschte Geräuschentwicklung zu vermeiden. Außerdem kann der Abstand so groß gewählt werden, dass unter dem Spannband kleinere Vögel wie z. B. Spatzen die Dachkante nach wie vor als Sitzfläche nutzen können, größere Vögel wie z. B. Tauben, die erhebliche Verschmutzungen verursachen können, die Dachkante jedoch nicht mehr als Sitzfläche nutzen können. Entsprechend dem gewünschten Abstand, den das Spannband zur Dachkante aufweisen soll, ist die Länge des längeren Schenkels oder des Sockels bemessen.

In einer abgewandelten Ausgestaltung für diesen Verwendungszweck als Vogelsperre kann vorgesehen sein, dass kein Winkelstück verwendet wird, sondern vielmehr der Spannmechanismus des Winkelstücks auch an einem geradlinigen, nicht abgewinkelten Halter montiert sein kann. Die beiden Schenkel des Winkelstücks können aus einem einzigen Werkstück bestehen, das entsprechend dem gewünschten Winkel - z. B. 90° - abgewinkelt worden ist, z. B. gebogen oder abgekantet worden ist. Wenn ausschließlich die Anwendung als Vogelsperre vorgesehen ist, kann der Herstellungsschritt des Abwinkelns entfallen. Falls vor dem Herstellungsschritt des Abwinkelns erforderlich ist, Material zu entfernen, z, B. einen keilförmigen Einschnitt in das Materialeinzubringen, z. B. in ein Metallprofil, bevor dieses um 90° gekantet wird, so kann auch dieser Herstellungsschritt entfallen. Durch den Entfall dieses einen oder beider Herstellungsschritte ist die Herstellung der Vogelsperre besonders preisgünstig möglich. Im Ergebnis kann das grundsätzlich gleiche und mit der Spannvorrichtung versehene, jedoch nicht abgewinkelte Bauteil verwendet werden kann, das ansonsten die beiden Schenkel des Winkelstücks bilden würde und das dementsprechend so lang ist wie ansonsten die Gesamtlänge der beiden Schenkel. Aufgrund dieser großen Länge kann dieses Bauteil gleichzeitig auch den erwähnten Sockel bilden bzw. ohne Verwendung eines eigenen, zusätzlichen Sockels die Montage der Spannvorrichtung in der gewünschten Höhe über der Dachkante ermöglichen. Dadurch, dass der zusätzliche Sockel entfallen kann, wird die Wirtschaftlichkeit der Vogelsperre weiter verbessert.

Entsprechend diesem überraschenden Verwendungszweck der Spannvorrichtung kann eine Vogelsperre folglich wie folgt ausgestaltet sein: sie weist einen Halter auf, der eine Klemmvorrichtung trägt, welche eine drehbare Wickelachse aufweist, die ein Spannband aufnimmt und in mehreren Drehstellungen feststellbar ist, wobei die Klemmvorrichtung ein Zahnrad aufweist, welches mit einer feststehenden Sperre zusammenwirkt, wobei das Zahnrad und die Sperre relativ zueinander in der Art beweglich sind, dass wahlweise in einer Sperrstellung die Sperre zwischen zwei benachbarte Zähne des Zahnrads ragt oder in einer Freigabestellung die Sperre sich außerhalb der Zähne befindet.

Der Halter der Vogelsperre kann als Winkelstück eines Beschlags ausgestaltet sein, der einen Teil einer zur Befestigung einer Schornsteinbekleidung an einem Schornstein dienenden Unterkonstruktion bildet und zwei winklig zueinander verlaufende Schenkel aufweist, wobei auf der Innenseite des Winkelstücks die Schenkel jeweils eine zur Anlage an einem Schornstein bestimmte Anlagefläche aufweisen und auf der Außenseite des Winkelstücks die Schenkel Anschlussflächen aufweisen, die zum Anschluss an die Schornsteinbekleidung bestimmt sind, und das Winkelstück weist eine Klemmvorrichtung für ein um den Schornstein führbares Spannband auf, wobei die Klemmvorrichtung eine drehbare Wickelachse aufweist, die in mehreren Drehstellungen feststellbar ist, wobei die Klemmvorrichtung ein Zahnrad aufweist, welches mit einer feststehenden Sperre zusammenwirkt, und das Zahnrad und die Sperre relativ zueinander in der Art beweglich sind, dass wahlweise in einer Sperrstellung die Sperre zwischen zwei benachbarte Zähne des Zahnrads ragt oder in einer Freigabestellung die Sperre sich außerhalb der Zähne befindet.

Ein Ausführungsbeispiel der Erfindung wird anhand der rein schematischen Darstellungen nachfolgend näher beschrieben. Dabei zeigt
- Fig. 1: eine perspektivische Ansicht auf ein Winkelstück mit Spannband und einer Klemmvorrichtung,
- Fig. 2: eine Ansicht in größerem Maßstab auf die Klemmvorrichtung des Winkelstücks von Fig. 1, die sich in ihrer Freigabestellung befindet, und
- Fig. 3: eine Ansicht ähnlich Fig. 2, wobei sich die Klemmvorrichtung in ihrer Sperrstellung befindet.

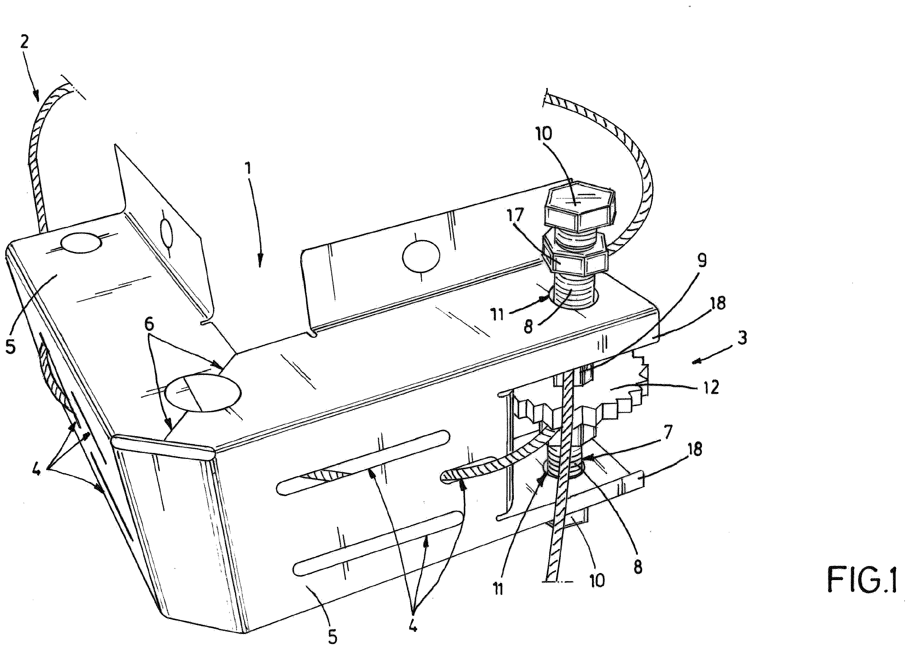

In Fig. 1 ist ein Winkelstück 1 dargestellt durch welches ein als Drahtseil ausgestaltetes Spannband 2 gefädelt ist. Wenn weitere Winkelstücke 1 auf das Spannband 2 aufgefädelt werden, kann so ein Ring geschaffen werden, der als Teil einer Unterkonstruktion zur Befestigung einer Schornsteinbekleidung dient, wobei der Ring in etwa horizontaler Ausrichtung um den Schornstein verläuft. Die erwähnten weiteren Winkelstücke können frei beweglich auf dem Spannband 2 angeordnet sein, während das in der Zeichnung dargestellt Winkelstück 1 eine Klemmvorrichtung 3 aufweist, die zur Festlegung des Spannbandes 2 dient und mit welcher das Spannband 2 auch gespannt werden kann. Aus Übersichtlichkeit ist daher nur das mit der Klemmvorrichtung 3 versehene Winkelstück 1 des erwähnten Rings in Fig. 1 dargestellt.

Das Winkelstück 1 weist mehrere Schlitze 4 auf, so dass das Spannband 2 durch einige dieser Schlitze 4 verlaufen kann und somit das Winkelstück 1 verliersicher am Spannband 2 erhalten ist. Das Winkelstück 1 besteht bis auf die Klemmvorrichtung 3 aus einem einzigen, mehrfach gekanteten Edelstahl-Blechzuschnitt. Dort, wo sich zwei rechtwinklig zueinander verlaufende Schenkel 5 des Winkelstücks 1 entlang einer Kontaktlinie 6 treffen, können die benachbarten Schenkel 5 durch Schweißpunkte miteinander verbunden sein, um die Stabilität des Winkelstücks 1 zu vergrößern.

Auf der vom Betrachter abgewandten Innenseite des Winkelstücks 1 bildet das Blech beider Schenkel 5 nach oben und nach unten abgekantete Anlageflächen, so dass eine großflächige, materialschonende Anlage des Winkelstücks 1 an einem Schornstein ermöglicht wird. Die dem Betrachter zugewandten Außenseiten der Schenkel 5 stellen Anschlussflächen dar, in denen die Schlitze 4 zur Befestigung weiterer Elemente der Unterkonstruktion einer Schornsteinbekleidung dienen, z. B. vertikal verlaufende Leisten. Beispielsweise können Montageschrauben mit einem spitzen Ende und mit einem groben Gewinde in die Schlitze 4 eingedreht werden, um diese weiteren Elemente an dem Winkelstück 1 zu befestigen.

Die Klemmvorrichtung 3 weist eine Wickelachse 7 auf, die durch zwei Schrauben 8 und eine Gewindehülse 9 gebildet wird. Die beiden Schrauben 8 erstrecken sich von gegenüberliegenden Seiten in die Gewindehülse 9, und Schraubenköpfe 10 der Schrauben 8 befinden sich außerhalb und im Abstand von dem betreffenden Schenkel 5. Der Schenkel 5 weist zwei miteinander fluchtende Bohrungen 11 auf, so dass die Wickelachse 7 in Bezug auf den Schenkel 5 axial beweglich gelagert ist.

Die Gewindehülse 9 weist einen vom Kreisrund abweichenden äußeren Umfang auf, der bei dem dargestellten Ausführungsbeispiel als Sechseck ausgestaltet ist. Mit einer dazu passenden, ebenfalls sechseckigen Innenkontur ist ein Zahnrad 12 drehfest auf der Gewindehülse 9 montiert. Eine besonders preisgünstige Ausgestaltung der Klemmvorrichtung 3 wird dadurch ermöglicht, dass das Zahnrad 12 nicht auf der Gewindehülse 9 fixiert ist, beispielsweise durch Verklebung, Verschweißung oder dergleichen. Das Zahnrad 12 weist eine Feinverzahnung auf, indem es 25 Zähne bei einem Durchmesser von 3 cm aufweist. Dabei erstrecken sich die Zahnräder asymmetrisch radial nach außen.

Das Spannband 2 weist ein erstes Ende auf, welches nur geringfügig über die Gewindehülse 9 hinausragt. In der Nähe dieses ersten Endes und unterhalb des Zahnrads 12 ist das Spannband 2 in der Gewindehülse 9 festgelegt. Nachdem das Spannband 2 die aus Fig. 1 ersichtliche Schlaufe beschreibt, ist es oberhalb des Zahnrads 12 zum zweiten Mal durch die Gewindehülse 9 geführt und es erstreckt sich weiter bis zu einem zweiten Ende des Spannbandes 2 hin, in einer zum Betrachter führenden Richtung. Dort, wo das Spannband 2 durch die Gewindehülse 9 verläuft, wirkt es wie ein Anschlag, welcher die axiale Beweglichkeit des Zahnrads 12 auf der Gewindehülse 9 begrenzt, so dass das Zahnrad 12 auf der Gewindehülse 9 mit einem entsprechenden axialen Spiel festgelegt ist.

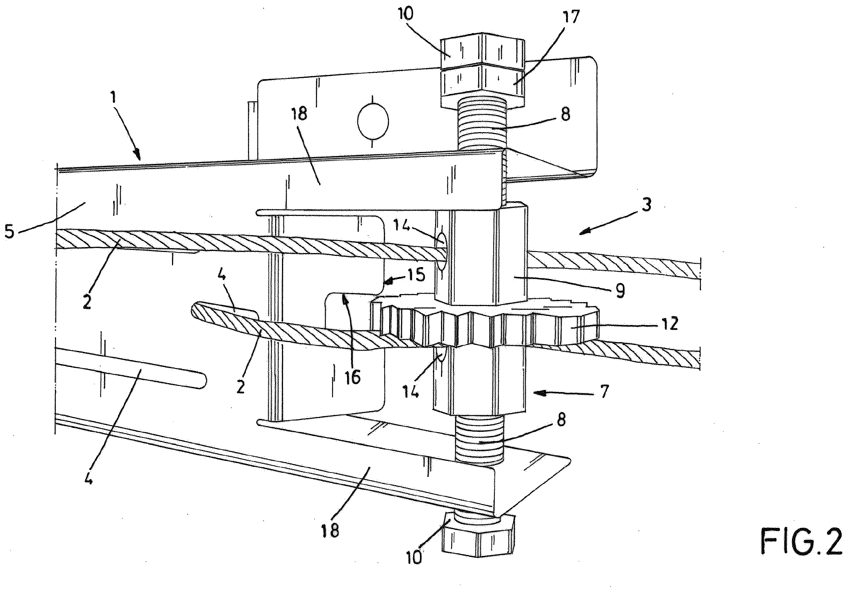

Fig. 2 zeigt den Bereich der Wickelachse 7 in einem größeren Maßstab als Fig. 1 und aus einem anderen Blickwinkel. Dabei sind zwei Querbohrungen 14 in der Gewindehülse 9 erkennbar, oberhalb und unterhalb des Zahnrads 12, durch welche das Spannband 2 verläuft. Weiterhin ist in Fig. 2 eine Sperre 15 in Form einer Blechlasche erkennbar, die durch einen entsprechend abgekanteten Abschnitt des Schenkels 5 gebildet ist und eine Freilauf-Ausnehmung 16 aufweist.

In Fig. 2 befindet sich die Klemmvorrichtung 3 in ihrer Freigabestellung, indem das Zahnrad 12 fluchtend mit der Freilauf-Ausnehmung 16 ausgerichtet ist und sich teilweise in diese erstreckt. Die Sperre 15 ist dementsprechend nicht wirksam und die Wickelachse 7 kann um ihre Längsachse in beliebiger Richtung gedreht werden. Schließlich ist aus Fig. 2 ersichtlich, dass die Gewindehülse 9 von den beiden Seitenwänden des Schenkels 5 ebenso beabstandet ist wie die beiden Schraubenköpfe 10, so dass dementsprechend eine axiale Beweglichkeit der Wickelachse 7 in axialer Richtung gegeben ist. Eine Kontermutter 17 liegt dem Schraubenkopf 10 der oberen Schraube 8 an, befindet sich also im größtmöglichen Abstand von dem Schenkel 5, so dass in dieser Konfiguration die maximale Beweglichkeit der Klemmvorrichtung 3 sowohl in axialer als auch in Drehrichtung gegeben ist.

Die mit den Schlitzen 4 versehene Außenseite des in Fig. 2 ersichtlichen Schenkels 5 ist breiter als die abgekantete Blechlasche, welche die Sperre 15 bildet. Daher verbleiben von der Außenseite zwei Randstege 18, welche den Schenkel 5 dort stabilisieren und aussteifen, wo die Wickelachse 7 angeordnet ist und die Außenseite des Schenkels 5 eine großflächige Aussparung aufweist, die teilweise auch durch die Bildung der die Sperre 15 bildenden Blechlasche geschaffen wurde.

Bei der Montage des Winkelstücks 1 bzw. des gesamten Rings, von dem das Winkelstück 1 einen Teil darstellt, kann nun das zweite Ende des Spannbands 2, welches oberhalb des Zahnrads 12 weit aus der Wickelachse 7 ragt, erfasst werden, um das Spannband 2 zunächst manuell vorzuspannen. Anschließend wird die obere Schraube 8 in die Gewindehülse 9 eingedreht, um das Spannband 2 in der Gewindehülse 9 zu fixieren. Dies kann zunächst ebenfalls manuell und zum Schluss mittels eines Werkzeugs wie z.B. eines Schraubenschlüssels erfolgen. Anschließend kann das Spannband 2 mittels eines Werkzeugs endgültig gespannt werden, wozu die Klemmvorrichtung 3 in ihre Sperrstellung gebracht wird:

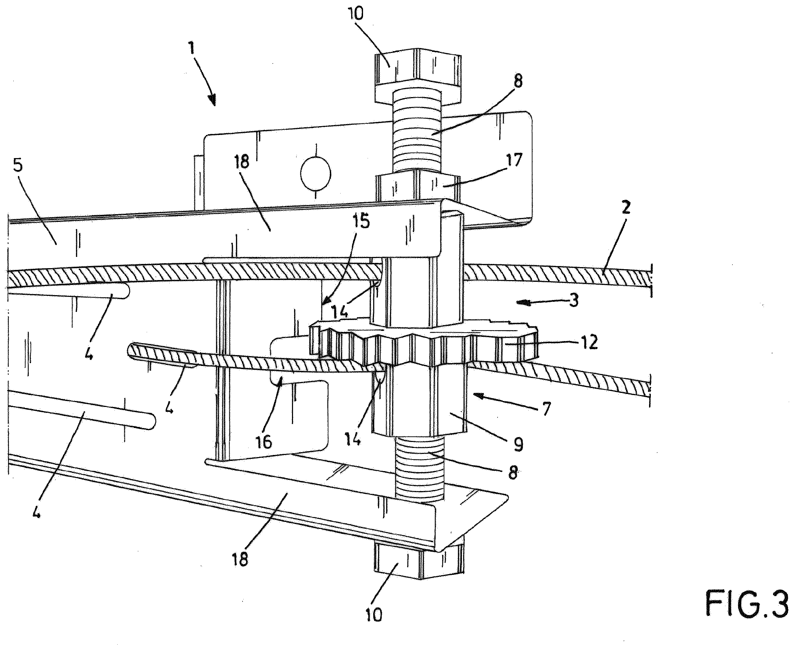

Fig. 3 zeigt, dass die Kontermutter 17 auf der oberen Schraube abgesenkt worden ist, bis sie an dem Schenkel 5 anliegt. Durch eine weitere Drehbetätigung der Kontermutter 17 ist die gesamte Wickelachse 7 angehoben worden, bis die Gewindehülse 9 der oberen Seitenwand des Schenkels 5 von innen anliegt. Dabei gerät das Zahnrad 12 in Eingriff mit der Sperre 15. Durch die asymmetrische Ausgestaltung der Zähne ermöglicht das Zahnrad 12 eine Ratschenfunktion, indem es in einer Drehrichtung auch in der Sperrstellung weiterhin noch gedreht werden kann und auf diese Weise ermöglicht, das Spannband 2 auf die Wickelachse 7 aufzuwickeln und so über die manuell aufgebrachte Vorspannung hinaus weiter zu spannen. Die Länge der Blechlasche, welche die Sperre 15 bildet, bewirkt eine Federbeweglichkeit der Sperre 15, um ebenfalls die erwähnte Ratschenfunktion zu ermöglichen. In der entgegengesetzten Drehrichtung hingegen verhindert die Sperre 15 eine Rückstellung des Zahnrads 12. Erst nachdem die Kontermutter 17 gelöst worden und die Wickelachse 7 wieder axial verschiebbar ist, kann die Klemmvorrichtung 3 in ihrer Freigabestellung gemäß Fig. 2 gebracht werden, so dass in dieser Konfiguration das Spannband 2 entspannt werden kann, z.B. um die Position des Rings am Schornstein zu korrigieren oder den Ring vom Schornstein zu demontieren.

Um das bereits erwähnte axiale Spiel zu bestimmen, mit welchem das Zahnrad 12 auf der Gewindehülse 9 zwischen den beiden Querbohrungen 14 und dem dadurch verlaufenden Spannband 2 geführt ist, sind die Querbohrungen 14 nach folgenden Randbedingungen in der Gewindehülse 9 angeordnet:
Bei der aus den Zeichnungen ersichtlichen Ausrichtung des Winkelstücks 1 ist die Querbohrung 14, die der Kontermutter 17 näher ist, die obere Querbohrung 14, und auch das Ende der Gewindehülse 9, das der Kontermutter 17 näher ist, ist das obere Ende der Gewindehülse 9. Dabei ist gemäß einer ersten Randbedingung die obere Querbohrung 14 so weit von dem oberen Ende der Gewindehülse 9 entfernt, dass die Gewindehülse 9 bis zum Anschlag an das Blech des Schenkels 5 heran bewegt und mittels der Kontermutter 17 in dieser Position gehalten werden kann, ohne dass das Spannband 2 in Kollision mit dem oberen Randsteg 18 kommt. Die untere Querbohrung 14 ist gemäß einer zweiten Randbedingung so weit vom unteren Ende der Gewindehülse 9 entfernt, dass in der aus Fig. 3 ersichtlichen, angehobenen bzw. Sperrstellung der Wickelachse 7 sichergestellt ist, dass das Zahnrad 12 mit der Sperre 15 kämmt und nicht vor der Freilauf-Ausnehmung 16 positioniert ist. Eine dritte Randbedingung besteht darin, dass die beiden Querbohrungen 14 so weit voneinander beabstandet sind, dass dazwischen ein ausreichender Platz zur Anordnung des Zahnrades 12 verbleibt.

Wie aus insbesondere den Fig. 2 und 3 ersichtlich ist, verbleibt noch ein erhebliches axiales Spiel des Zahnrads 12 zwischen den beiden Querbohrungen 14, nämlich etwa entsprechend der Breite des Zahnrades 12 selbst. Abweichend von dem dargestellten Ausführungsbeispiel kann daher die untere Querbohrung 14 auch noch höher als aus den Fig. 2 und Fig. 3 ersichtlich angeordnet sein.

Für die Verwendung als Vogelsperre kann das Winkelstück 1 in der dargestellten Ausgestaltung verwendet werden. Alternativ können bei der Herstellung des Winkelstücks 1 Herstellungsschritte entfallen, um einen geradlinigen Halter zu schaffen, der die Klemmvorrichtung 3 trägt: das in den Zeichnungen dargestellte Winkelstück 1 besteht bis auf die Klemmvorrichtung 3 aus einem einzigen, mehrfach gekanteten Edelstahl-Blechzuschnitt. Dort, wo sich zwei rechtwinklig zueinander verlaufende Schenkel 5 des Winkelstücks 1 entlang einer Kontaktlinie 6 treffen, ist zunächst Material aus diesem Blechzuschnitt entfernt worden, oder der Blechzuschnitt weit von vornherein zwei Einkerbungen auf, so dass jedenfalls nach dem Kant-Vorgang die beiden Ufer der jeweiligen Einkerbung an der Kontaktlinie aneinander anliegen. Um den erwähnten geradlinigen Halter zu schaffen, wird zunächst kein Material aus dem Blechzuschnitt entfernt bzw. wird der Blechzuschnitt zunächst ohne Einkerbungen hergestellt, und anschließend entfällt auch der Herstellungsschritt des Kantens, so dass der geradlinige Halter besonders einfach und preisgünstig herstellbar ist.

### Bezugszeichen:

- 1: Winkelstück
- 2: Spannband
- 3: Klemmvorrichtung
- 4: Schlitz
- 5: Schenkel
- 6: Kontaktlinie
- 7: Wickelachse
- 8: Schraube
- 9: Gewindehülse
- 10: Schraubenkopf
- 11: Bohrung
- 12: Zahnrad
- 14: Querbohrung
- 15: Sperre
- 16: Freilauf-Ausnehmung
- 17: Kontermutter
- 18: Randsteg

## Patentansprüche

1. Winkelstück (1) eines Beschlags einer zur Befestigung einer Schornsteinbekleidung an einem Schornstein dienenden Unterkonstruktion,
mit zwei winklig zueinander verlaufenden Schenkeln (5), wobei auf der Innenseite des Winkelstücks (1) die Schenkel (5) jeweils eine zur Anlage an einem Schornstein bestimmte Anlagefläche aufweisen und auf der Außenseite des Winkelstücks (1) die Schenkel (5) Anschlussflächen aufweisen, die zum Anschluss an die Schornsteinbekleidung bestimmt sind,
und mit einer Klemmvorrichtung (3), **dadurch gekennzeichnet, dass** die Klemmvorrichtung (3) für ein um den Schornstein führbares Spannband (2) ist,
wobei die Klemmvorrichtung (3) eine drehbare Wickelachse (7) aufweist, die in mehreren Drehstellungen feststellbar ist, wobei die Klemmvorrichtung (3) ein Zahnrad (12) aufweist, welches mit einer feststehenden Sperre (15) zusammenwirkt,
wobei das Zahnrad (12) und die Sperre (15) relativ zueinander in der Art beweglich sind, dass wahlweise in einer Sperrstellung die Sperre (15) zwischen zwei benachbarte Zähne des Zahnrads (12) ragt oder in einer Freigabestellung die Sperre (15) sich außerhalb der Zähne befindet.

2. Winkelstück nach Anspruch 1, wobei das Zahnrad (12) und die Sperre (15) als Ratsche ausgestaltet sind, derart, dass in einer ersten Drehrichtung das Zahnrad (12) auch in der Sperrstellung drehbar ist und in einer zweiten, entgegengesetzten Drehrichtung das Zahnrad (12) in der Sperrstellung blockiert ist.

3. Winkelstück nach Anspruch 1 oder 2,
wobei die Sperre (15) ortsfest an einem Schenkel (5) angeordnet ist
und das Zahnrad (12) entlang der Wickelachse (7) zwischen der Sperrstellung und der Freigabestellung axial beweglich ist,
und das Zahnrad (12) in der Sperrstellung axial blockierbar ist.

4. Winkelstück nach einem der vorhergehenden Ansprüche, wobei das Winkelstück (1) aus Blech besteht.

5. Winkelstück nach Anspruch 4, wobei das Winkelstück (1) aus einem einzigen, mehrfach gekanteten Blechzuschnitt gebildet ist.

6. Winkelstück nach Anspruch 4 oder 5, wobei die Sperre (12) als Blechlasche ausgestaltet ist

7. Winkelstück nach einem der vorhergehenden Ansprüche, wobei die Klemmvorrichtung (3) folgende Elemente aufweist:
• zwei Schrauben (8),
die sich durch einen Schenkel (5) erstrecken,
• eine Gewindehülse (9),
in welche die beiden Schrauben (8) aus entgegengesetzten Richtungen eingeschraubt sind,
und die quer zu ihrer Längsachse eine Querbohrung (14) aufweist, durch welche sich das Spannband (2) erstreckt,
• das Zahnrad (12),
welches drehfest auf der Gewindehülse (9) angeordnet ist,
• und die Sperre (15),
wobei das Spannband (2) in seiner jeweiligen Stellung durch eine Schraube (8) in der Gewindehülse (9) wahlweise festlegbar oder lösbar ist,
und die Schraubenköpfe (10) der beiden Schrauben (8) außerhalb des Schenkels (5) angeordnet sind und die Schrauben (8) mitsamt der Gewindehülse (9) verliersicher im Schenkel (5) halten,
und wobei die Schrauben (8) so lang bemessen sind, dass sie über den Schenkel (5) hinausragen und mitsamt der Gewindehülse (9) und dem Zahnrad (12) in axialer Richtung beweglich innerhalb des Schenkels (5) gelagert sind.

8. Winkelstück nach Anspruch 7, wobei die Gewindehülse (9) eine zweite Querbohrung (14) aufweist, derart, dass beide Enden des Spannbandes (2) jeweils in einer Querbohrung (14) aufnehmbar sind.

9. Winkelstück nach Anspruch 8, wobei die beiden Schrauben (8) unabhängig voneinander mit jeweils einer der beiden Querbohrungen (14) zur Festlegung oder Freigabe des Spannbandes (2) zusammenwirken.

10. Winkelstück nach einem der Ansprüche 7 bis 9, wobei eine Schraube (8) außerhalb des Schenkels (5) eine Kontermutter (17) trägt.

11. Winkelstück nach einem der vorhergehenden Ansprüche, wobei das Zahnrad (12) wenigstens 25 Zähne aufweist

12. Unterkonstruktion einer Schornsteinbekleidung, die zur Befestigung an einem Schornstein bestimmt ist,
mit wenigstens zwei Winkelstücken (1), die gemeinsam an einem Spannband (2) gehalten sind,
**dadurch gekennzeichnet, dass** eines von den Winkelstücken nach einem der vorhergehenden Ansprüche ausgestaltet ist.

## Claims

1. Angle piece (1) of a metal fitting of a substructure used for fastening a chimney cladding to a chimney, having two arms (5) that are set at an angle to each other, where on the inner side of the angle piece (1) each of the arms (5) incorporates a contact face designed for fitting against a chimney and where on the outer side of the angle piece (1) the arms (5) incorporate attachment faces that are designed for attachment to the chimney cladding, and having a clamping fixture (3), **characterised in that** the clamping fixture (3) is for a tensioning strip (2) that can be run around the chimney, where the clamping fixture (3) incorporates a rotatable winding axle (7) that can be fixed in a number of rotary positions, where the clamping fixture (3) incorporates a gear wheel (12) that co-acts with a stationary catch (15), where the gear wheel (12) and the catch (15) can be moved relative to each other in such a way that either, when in an engaged position, the catch (15) engages between two adjacent teeth of the gear wheel (12) or, when in a release position, the catch (15) is positioned clear of the teeth.

2. Angle piece in accordance with claim 1, where the gear wheel (12) and the catch (15) are designed to form a ratchet in such a way that in a first direction of rotation, even when the catch (15) is in the engaged position, the gearwheel (12) can be rotated and in a second, opposing direction of rotation, when the catch (15) is in the engaged position, the gearwheel (12) is locked.

3. Angle piece in accordance with claim 1 or 2, where the catch (15) is fastened in place on one arm (5) and the gear wheel (12) can be moved axially along the winding axle (7) between the engaged position and the release position, and where the gear wheel (12) can be locked axially in the engaged position.

4. Angle piece in accordance with any one of the foregoing claims, where the angle piece (1) is made from metal sheet.

5. Angle piece in accordance with claim 4, where the angle piece (1) is formed from a single sheet metal blank with edges bent a number of ways.

6. Angle piece in accordance with claim 4 or 5, where the catch (15) is designed as a sheet metal flap.

7. Angle piece in accordance with any one of the foregoing claims, where the clamping fixture (3) incorporates the following elements
• two bolts (8),
that extend through one arm (5),
• a threaded collar (9),
into which the two bolts (8) are screwed from opposite directions and which are provided with a drilled hole (14) that extends at right angles to their longitudinal axis and through which the tensioning strip (2) is fed,
• the gear wheel (12),
which is non-rotatably fixed to the threaded collar (9),
• and the catch (15),
where the tensioning strip (2) can be either fastened or released in whatever position it is in by a bolt (8) in the threaded collar (9), and
where the heads (10) of the two bolts (8) are arranged outside the arm (5) and the bolts (8) together with the threaded collar (9) are retained unlosably in the arm (5), and where the bolts (8) are dimensioned long enough to project beyond the arm (5) and together with the threaded collar (9) and the gear wheel (12) are mounted so as to be movable in an axial direction inside the arm (5).

8. Angle piece in accordance with claim 7, where the threaded collar (9) is provided with a second transverse drilled hole (14), in such a way that each end of the tensioning strip (2) can be inserted into one of the two transverse drilled holes (14).

9. Angle piece in accordance with claim 8, where the two bolts (8) co-act independently of each other with each of the two transverse drilled holes (14) to fix or release the tensioning strip (2).

10. Angle piece in accordance with any one of claims 7 to 9, where one bolt (8) bears a lock nut (17) outside the arm (5).

11. Angle piece in accordance with any one of the foregoing claims, where the gear wheel (12) incorporates at least 25 teeth.

12. Substructure of a chimney cladding that is designed to be fastened to a chimney,
having at least two angle pieces (1) that are jointly retained on a tensioning strip (2), **characterised in that** one of the angle pieces (1) is designed in accordance with any one of the foregoing claims.

## Revendications

1. Pièce d'angle (1) d'une ferrure d'une substructure servant à fixer un revêtement de cheminée contre une cheminée, comprenant deux pans (5) présentant un tracé réciproquement angulaire, sachant que sur le côté intérieur de la pièce d'angle (1) les pans (5) présentent respectivement une surface d'applique permettant l'applique contre une cheminée et que sur le côté extérieur de la pièce d'angle (1) les pans (5) présentent des surfaces de raccordement servant au raccordement contre le revêtement de la cheminée, et comprenant un dispositif de bridage (3), **caractérisée en ce que** le dispositif de bridage (3) est destiné à un ruban de serrage (2) guidable autour de la cheminée, sachant que le dispositif de bridage (3) présente un axe d'enroulement (7) tournant immobilisable sur plusieurs positions de rotation, sachant que le dispositif de bridage (3) présente un roue dentée (12) interagissant avec un dispositif de blocage (15) immobile, sachant que la roue dentée (12) et le dispositif de blocage (15) sont déplaçables l'un relativement à l'autre de sorte, au choix, que sur une position de blocage le dispositif de blocage (15) fait saillie entre deux dents voisines de la roue dentée (12), ou que sur une position de déblocage le dispositif de blocage (15) se trouve en dehors des dents.

2. Pièce d'angle selon la revendication 1, sachant que la roue dentée (12) et le dispositif de blocage (15) sont configurés en système à cliquet de sorte que dans un premier sens de rotation la roue dentée (12) peut tourner aussi en position de blocage, et que dans un second sens de rotation, opposé, la roue dentée (12) est bloquée en position de blocage.

3. Pièce d'angle selon la revendication 1 ou 2, sachant que le dispositif de blocage (15) est disposé à demeure contre un pan (5) et que la roue dentée (12) est déplaçable axialement le long de l'axe d'enroulement (7) entre la position de blocage et la position de déblocage, et que la roue dentée (12) est blocable axialement en position de blocage.

4. Pièce d'angle selon l'une des revendications précédentes, sachant que la pièce d'angle (1) se compose de tôle.

5. Pièce d'angle selon la revendication 4, sachant que la pièce d'angle (1) est formée à partir d'une tôle unique découpée, à bords plusieurs fois relevés.

6. Pièce d'angle selon la revendication 4 ou 5, sachant que dispositif le blocage (15) est configuré comme patte en tôle.

7. Pièce d'angle selon l'une des revendications précédentes, sachant que le dispositif de bridage (3) présente les éléments suivants
• deux vis (8),
qui s'étendent à travers un pan (5),
• une douille filetée (9),
dans laquelle les deux vis (8) sont vissées depuis deux directions opposées, et qui présente un alésage transversal (14) traversant son axe longitudinal, alésage à travers lequel s'étend le ruban de serrage (2),
• la roue dentée (12),
qui est disposée sans pouvoir tourner sur la douille filetée (9),
• et le dispositif de blocage (15),
sachant que le ruban de serrage (2) est au choix immobilisable sur sa position respective ou détachable de celle-ci au moyen d'une vis (8) dans la douille filetée (9), et que les têtes (10) des deux vis (8) sont disposées en dehors du pan (5) et que les vis (8) tiennent avec la douille filetée (9) dans le pan (5) sans risque d'être perdues, et que les vis (8) sont dimensionnées d'une longueur leur permettant de dépasser le pan (5) et d'être en appui mobile dans le sens axial, avec la douille filetée (9) et la roue dentée (12), à l'intérieur du pan (5).

8. Pièce d'angle selon la revendication 7, sachant que la douille filetée (9) présente un deuxième alésage transversal (14), de sorte que les deux extrémités du ruban de serrage (2) peuvent être reçues respectivement dans un alésage transversal (14).

9. Pièce d'angle selon la revendication 8, sachant que les deux vis (8) interagissent indépendamment l'une de l'autre avec respectivement l'un des deux alésages transversaux (14) pour immobiliser ou libérer le ruban de serrage (2).

10. Pièce d'angle selon l'une des revendications 7 à 9, sachant qu'une vis (8) à l'extérieur du pan (5) porte un contre-écrou (17).

11. Pièce d'angle selon l'une des revendications précédentes, sachant que la roue dentée (12) présente au moins 25 dents.

12. Substructure d'un revêtement de cheminée, qui est destinée à la fixation contre une cheminée, comprenant au moins deux pièces d'angle (1) retenues ensemble contre un ruban de serrage (2), **caractérisée en ce que** l'une des pièces d'angle (1) est configurée selon l'une des revendications précédentes.
